# EUROPEAN PATENT SPECIFICATION

(11) **EP 1 546 868 B1**
(45) Date of publication and mention of the grant of the patent: **19.11.2008**
(21) Application number: 03756845.8
(22) Date of filing: 17.09.2003
(51) Int. Cl.: G06F 9/38, G06F 9/30

(54) **SUPERPIPELINED VLIW PROCESSOR ADDRESSING BYPASS-LOOP SPEED LIMITATION**
SUPERPIPELINE-VLIW-PROZESSOR ZUR BEHANDLUNG DER GESCHWINDIGKEITSBEGRENZUNG AUFGRUND EINER BYPASS-SCHLEIFE
PROCESSEUR VLIW SUPER-PIPELINE TRAITANT LA LIMITATION DE VITESSE DUE A UNE BOUCLE DE CONTOURNEMENT

(30) Priority: 17.09.2002 US 411589 P; 07.05.2003 US 468931 P
(43) Date of publication of application: 29.06.2005
(73) Proprietor: NXP B.V., 5656 AG Eindhoven (NL)
(72) Inventor: SLAVENBURG, Gerrit, San Jose, CA 95131 (US); VAN DE WAERDT, Jan-Willem, San Jose, CA 95131 (US)
(74) Representative: van der Veer, Johannis Leendert
(86) International application number: PCT/US2003/029705
(87) International publication number: WO 2004/027602

(56) References cited:
- EP-A- 0 653 703
- CORPORAAL H: "TTAs: Missing the ILP complexity wall" JOURNAL OF SYSTEMS ARCHITECTURE, ELSEVIER SCIENCE PUBLISHERS BV., AMSTERDAM, NL, vol. 45, no. 12-13, June 1999 (1999-06), pages 949-973, XP004169209 ISSN: 1383-7621
- PALACHARLA S ET AL: "Complexity-Effective Superscalar Processors" COMPUTER ARCHITECTURE NEWS, 2 June 1997 (1997-06-02), pages 206-218, XP010234352 New York, US

## Description

The invention relates to a method to create a fully synthesizable super-pipelined VLIW (Very Long Instruction Word) processor that creates both a high frequency operating processor as well as a high performance processor.

A VLIW CPU typically achieves a clock speed close to, but slightly less than a RISC processor, in the same technology and same design style. For example, in .12u CMOS technology, a fully synthesizable ARM and MIPS RISC CPU achieves 250 - 350 MHz worst-case clock speed, whereas a fully synthesizable VLIW CPU, such as a Philips TriMedia TM3260 CPU core achieves a 240 MHz clock speed. Although the VLIW CPU clock speed is somewhat lower than the clock speed of a RISC CPU, it performs more operations in parallel and has hence a substantially higher performance on parallelizable applications.

The clock speed of a VLIW CPU is limited by several problems, in particular by:
1. speed of internal Static RAM memories;
2. inherent logic gate depth of performing basic arithmetic operations in the functional units; and
3. a basic so-called VLIW CPU bypass-loop.
The VLIW CPU bypass-loop comprises a path a signal can follow from an output of a VLIW CPU' Functional Unit back to an input of the same or another VLIW CPU' Functional Unit. The path includes a bypass network (typically implemented as a full crossbar switch).

Super pipelining can address problems 1 and 2, as will be explained below. Problem 3, the VLIW CPU bypass-loop, is a fundamental problem. A bypass-loop is also present in a RISC CPU, but since a RISC CPU' bypass-loop comprises less sources (or number of inputs) and destinations (or number of outputs) than in a VLIW CPU, the RISC CPU can run its clock somewhat faster than the VLIW CPU.

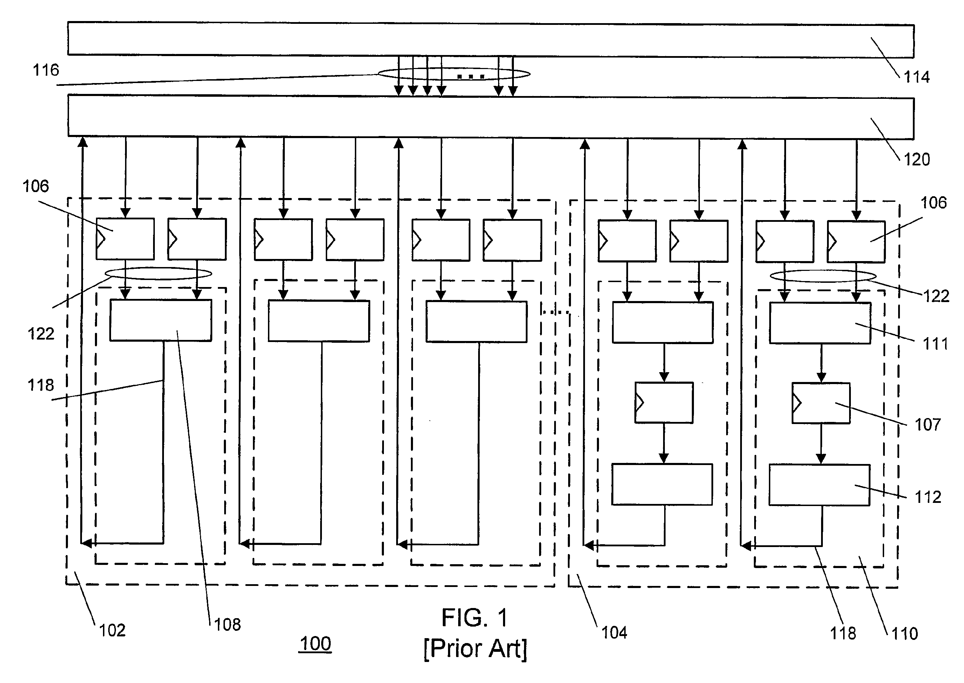

Figure 1 shows a data-path of an example simple pipelined VLIW processor 100, comprising a register file 114, a bypass network 120, single cycle functional units (FUs) 102 and two cycle FUs 104 (. In each clock cycle, the datapath can start 5 or fewer computations; one on each of the functional units and data is first clocked in register 106 (a register can also be referred to as a pipeline register). After being clocked data enters a Functional Unit (FU) as FU input 122 and leaves as FU output 118. Data, coming from bypass network 120 and entering single cycle functional units (FUs) 102, passes through a single register 106 and a single stage Functional Unit (FU) 108. Data, coming from bypass network 120 and entering two cycle FUs 104, passes through two registers, register 106 and register 107, stage 111 and stage 112. The arguments of each computation can either come from the central register file 114 as register output 116, or from a result of a computation that completed in the previous cycle, FU output 118.

The bypass-loop speed limitation can be understood as follows:
◆ a result, produced in the last stage of functional unit 'm' in clock cycle 'i' may be needed as left or right argument in functional unit 'n' in clock cycle 'i+1'
◆ hence, there needs to be a connection from every FU output 118 to each of the inputs of a functional unit, FU input 122, that crosses at most one pipeline register (to delay by no more than one clock period)
◆ the speed with which this basic loop operates is determined by the technology, and in particular by the total wire length and by the number of inputs to the multiplexer on each functional unit' input pipeline register (bypass network 120in figure 1 comprises one multiplexer for each functional unit inputs, with as its input one register file output and all functional unit outputs)
◆ wire length increases with the number of functional units, as does the number of inputs in the multiplexer

Note that many variants of VLIW CPU data-path are possible, for example US 6,122,722 (Filed: Mar. 17, 1999; Appl. No.: 09/271,202; Inventor: Gerrit Slavenburg teaches how to reduce the number of central register file read ports, as well as write ports and writeback buses without significantly reducing performance. Another VLIW CPU machine may have partitioned a VLIW CPU into two parts: a datapath for integer computation, with private central register file and a datapath for floating point computation, with private central register file, interconnected by a few communications buses to forward integer results for use in floating computation and vice-versa. It is also possible to put the pipeline register stage not at the input of a functional unit but at the output of a functional unit, and/or elsewhere. All such variants incur a substantially similar single cycle bypass-loop signal delay, with associated fundamental speed limitation.

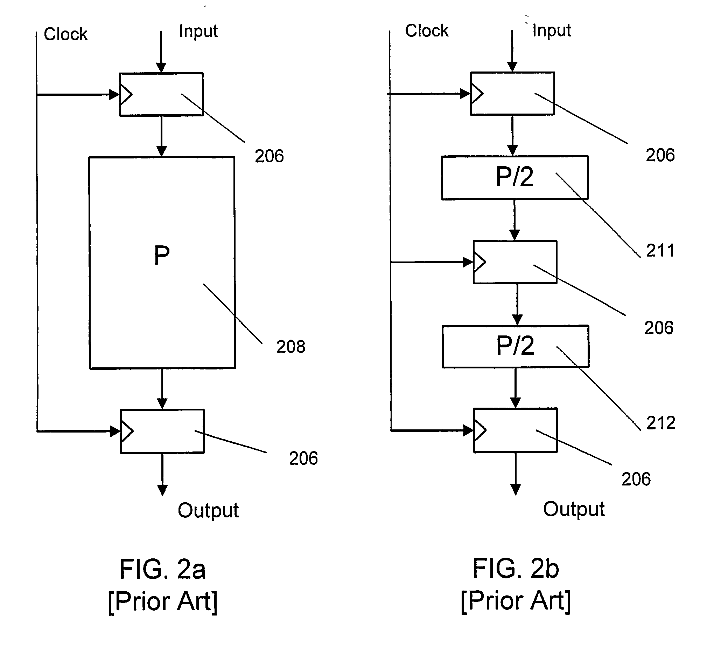

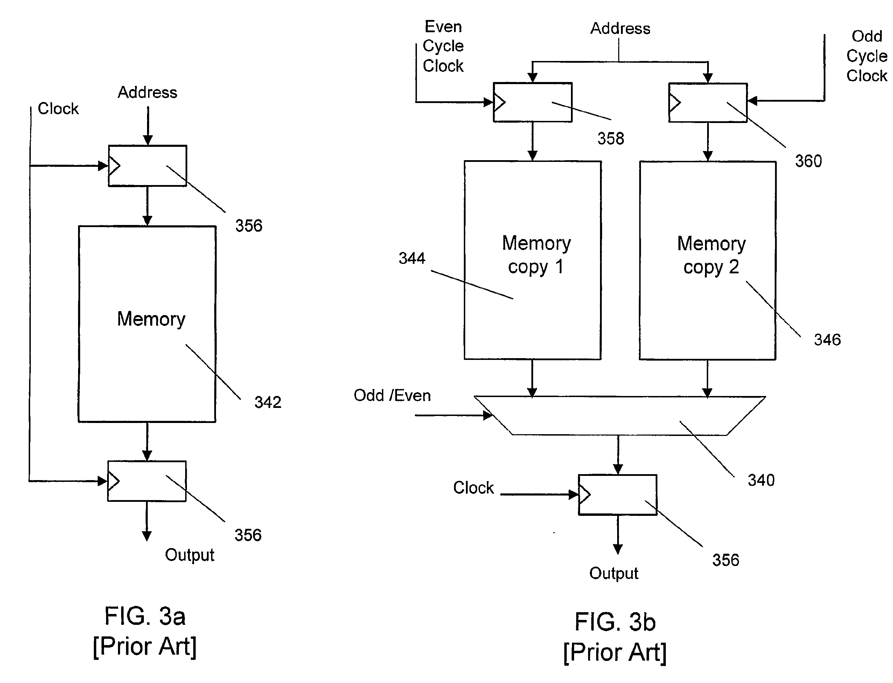

A well-known technique to make a CPU execute a processor instruction faster is a technique called super pipelining. Figure 2a shows a dataflow in a typical pipelined logic stage of a CPU from input to output. Data is clocked in a register 206 and is processed in combinatorial logic with gate depth P, 208 and is then clocked in another register 206. Figure 2b shows a dataflow in a typical super pipelined logic stage of a CPU from input to output. Data is clocked in a register 206 and is processed in combinatorial logic with gate depth P/2, 211 and is then clocked at a register 206, processed in combinatorial logic with gate depth P/2, 212 and finally clocked again in a register 206. Figure 3a shows a typical pipelined memory stage in a CPU and figure 3b shows a typical super pipelined memory stage in a CPU. The logic stage can be super pipelined by a factor two by inserting an extra pipeline register in the middle of the combinatorial logic, thus reducing gate depth between clocks by a factor 2. This allows speeding up of the clocks by a factor close to two, but it will take one more clock cycle of delay for each output value. Note that clock speedup is slightly less than 2x, due to clock skew, setup time and delay time through the pipeline register. The memory stage in a CPU can be 2x super pipelined by using two copies of the memory (memory copy 1, 344, and memory copy 3, 346) in alternating cycles, as shown in figure 3b. Figure 3b further comprises an even cycle clock address register 358, an odd cycle clock address register 360, odd/even memory output selector 340 and register 356. Both memory copies, 344 and 346, need to have the same content, which requires inserting special action, possibly including stall cycles, during a write - where both memories need to be given the same data.

Note that it is possible to super pipeline by factors greater than 2, although large factors become less efficient due to the clock skew, setup and delay time of each added pipeline register. For .12u CMOS technology, a clock speedup of around 1.8x is achieved by 2x super pipelining.

Super pipelining a VLIW CPU without addressing the bypass-loop will usually not speed up the frequency of operation, since the bypass-loop is either the limiting factor or close to the limiting factor for a well-balanced VLIW CPU design. If the bypass-loop itself is also super pipelined, for example by inserting one extra pipeline stage in it, then effectively the VLIW CPU now runs at 1.8x clock speed, but the critical path in clock cycles for every computation has doubled, because everything now takes twice more clocks, resulting in no practical speedup. It is noted that some speedup is possible, since more operations can be issued per time unit; but for programs which were bound by the computation' critical path, i.e., there existed no shortage of functional units in the original VLIW CPU, no overall speed advantage is achieved.

A new design and method of designing a super pipelined VLIW CPU is presented. The new method of super pipelining a VLIW CPU is based on analyzing a benchmark set of programs. All operation latencies are doubled (to super-pipeline the entire design), and then a Subset of operations is chosen such that:
- any operations of the subset can be performed with minimal logic gate depth; and
- when performing an operation of the subset (with a basic-loop of one cycle) it will result in an, at least close to, original benchmark execution time in terms of number of clock cycles.

Additional advantages and novel features will be set forth in the description which follows, and in part may become apparent to those skilled in the art upon examination of the following, or may be learned by practice of the invention.

For completeness, reference is made to the publication by H. Corporaal, "TTAs: Missing the ILP complexity wall", Journal of Systems Architecture, Vol. 45, No. 12/13, pg. 949-973, June 1999, Elsevier publishing company. This publication addresses, among other things, the data path complexity of VLIW processors. However, this publication neither teaches nor suggests the wiring for the cluster of fast functional units being different from that of the cluster of super-pipelined units, both present in the processor of the invention. The wiring in the invention is chosen such that signal propagation delays within the fast functional unit cluster are minimized. Corporaal addresses the issue of splitting the functional units for functional un-related operations, but does not address an associated modification of the wiring for data traffic between the split units other than minimizing the number of buses.

The invention as set out in claim 1 is explained in further details, by way of examples, and with reference to the accompanying drawings wherein:
**Fig. 1** shows a diagram of an example of a typical prior art VLIW processor;
**Fig. 2a** shows a diagram of a typical prior art pipelined logic stage;
**Fig. 2b** shows a diagram of a typical prior art super pipelined logic stage;
**Fig. 3a** shows a diagram of a typical prior art pipelined memory stage
**Fig. 3b** shows a diagram of a typical prior art super pipelined memory stage;
**Fig. 4** shows a diagram of a new super-pipelined VLIW CPU; and
**Fig. 5** shows a diagram of another new super-pipelined VLIW CPU.

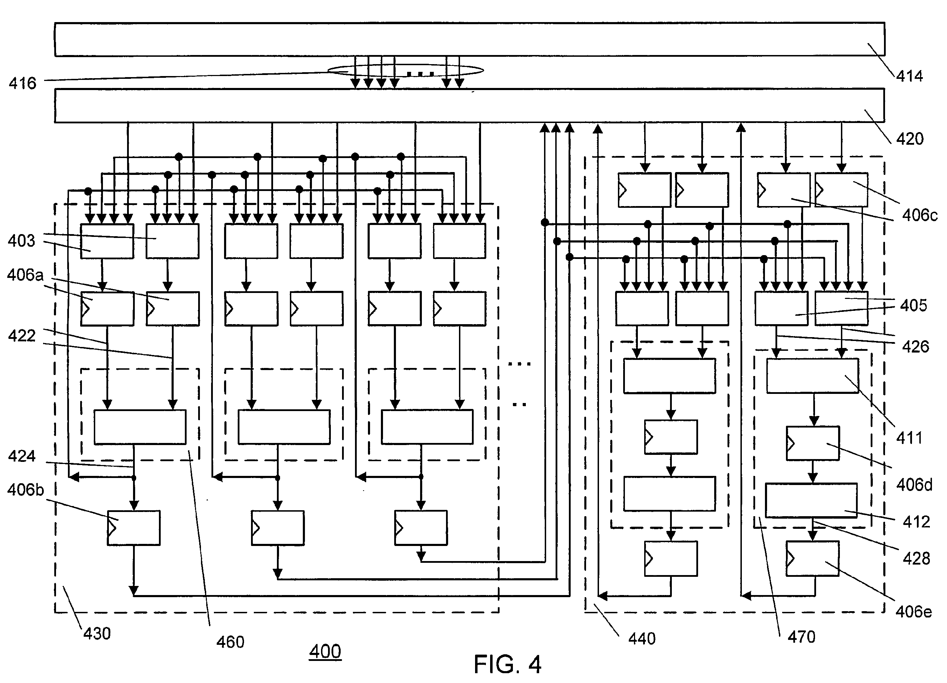

**Fig. 4** shows a diagram of an example design of a new super-pipelined VLIW CPU 400 according to the invention (A CPU can also be called a processor). The new super-pipelined VLIW CPU 400 comprises a register file 414, a bypass network 420, a fast Functional Unit (FU) cluster 430 and a normal FU cluster 440. Fast FU cluster 430 comprises a small number of Functional Units (FUs), implementing the chosen operation subset, in a basic loop with only a single register delay in the loop. Any other functional unit or cluster thereof, of which normal FU cluster 440 is shown in VLIW CPU 400, are connected around this basic core, but are part of a basic loop that involves multiple clock cycles. Fast FU cluster 430 shows circuitry and wiring around three seemingly identical copies of a fast FU 460. It is noted that in an actual VLIW CPU design however the number of fast FUs may be varying, the wiring and registers around them and each fast FU 460 may be identical or different of design. Data that flows from bypass network 420 to fast FU cluster 430 passes fast selector 403 (also referred to as fast multiplexer), register 406a, fast FU 460. Data enters fast FU 460 at fast FU input 422 and exits at fast FU output 424. At this point data will flow to the fast selector 403 as well a to a register 406b, which output is routed to the normal FU cluster 440. Data that flows from bypass network 420 to normal FU cluster 440 passes a register 406c, normal selector 405 (also referred to as normal multiplexer), normal FU 470. Data enters normal FU 470 at normal FU input 426, pass through normal FU stage1 411 register 406d and normal FU stage2 412, and exits normal FU 470 at fast FU normal 428. At this point data will flow to a register 406e, which output is routed to the bypass network 420.

A basic-loop signal path in Figure 4' fast FU cluster 430 comprises a fast FU 460, a 4 input fast multiplexer 403 (also referred to as fast selector) and a delay register 406a before each input of each of fast FU 460. This basic-loop has only relative short wires, and its signal path only have a small fan-out, allowing the basic-loop to run at a high speed. Typically the combinatorial logic in normal FU stage 1 411 is not deep or can even be empty. The delay caused by a substantial wire length from register 406b (connected to fast FU 460) to normal selector 405 makes that the allowable delay caused by combinatorial logic of normal FU stage 411 is more limited. Wiring within a cluster of fast FUs (or within a cluster of normal FUs) is typically relative short. However wiring between the cluster of fast FUs and the cluster of normal FUs is typically relative long. On top of this the wiring between the cluster of fast FUs and the cluster of normal FUs has typically a higher fanout (although Figure 4 only shows two normal FUs, the number of normal FUs can be substantial; e.g., 20). Due to the relative long wiring and the high fanout the signal delay over these wires will typically be relative high. Therefore a bypass-loop delay within the fast cluster of FUs will typically be substantially smaller than the delay from the fast cluster through bypass into the normal FU's.

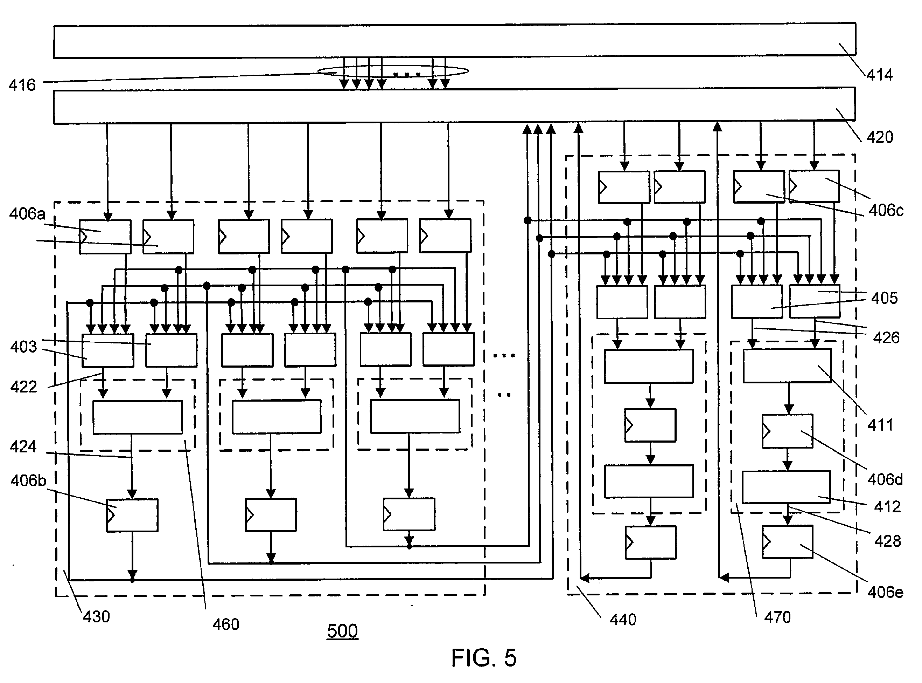

Other variants are possible, depending on technology parameters. The best mode of implementation for the basic-loop implementation in 0.12u CMOS technology is shown in figure 4. Figure 5 shows another embodiment of the invention of a new super-pipelined VLIW CPU wherein the fast selector 403 is located behind register 406. Figure 5 may illustrate a technology with other properties, wherein it is better to have the fast selector 403 (shown in the drawing as a four to one selector) behind the register 406a. It is also possible to have more, or less, than three fast Functional Units in the fast core (a Functional Unit is also referred to as ALU and may include a clocked register at its output). Typically the number of normal Functional Units is much larger than the number of fast Functional Units.

An example of the best mode implementation is described below. It is described by applying the new method of super pipelining to a 5-issue VLIW processor with the operation set and functional unit arrangement of the Philips PNX1300 (for a detailed descriptions of the 5-issue VLIW processor and its operations see: 'TriMedia TM-1300 media processor data-book', Philips Semiconductors, incorporated herewith by reference).

Prior art VLIW CPU (PNX1300):

| Unit | Issue-slots | | | | | Latency | Operations |
|---|---|---|---|---|---|---|---|
| const | 1 | 2 | 3 | 4 | 5 | 1 | imm, uimm |
| alu | 1 | 2 | 3 | 4 | 5 | 1 | all integer and logical arithmetic operations |
| dmem | | | | 4 | 5 | 3 | |
| dmemspec | | | | | 5 | 3 | |
| shifter | 1 | 2 | 3 | 4 | 5 | 1 | |
| dspalu | 1 | | 3 | | 5 | 2 | |
| dspmul | | 2 | 3 | | | 3 | |
| branch | | 2 | 3 | 4 | | 3 | |
| falu | 1 | | | 4 | | 3 | |
| ifmul | | 2 | 3 | | | 3 | |
| fcomp | | | 3 | | | 1 | |
| ftough | | 2 | | | | 17 | |

In the prior art VLIW processor, the following operations are in the bypass loop of one cycle length:
CONST: imm, uimm
ALU: iadd isub igtr igeq ieql ineq ileqi igtri igeqi ilesi ieqli ineqi ugtr ugeq uleqi ugtri ugeqi ulesi ueqli uneqi bitand bitor bitxor bitandinv bitinv h_iabs sex 16 iaddi isubi carry izero inonzero packbytes mergemsb mergelsb pack16msb pack16lsb ubytesel ibytesel
SHIFTER: asli roli asri lsri asl rol asr lsr dualasr mergedual16lsb funshift1 funshift2 funshift3

In the invention, a following Subset of operations has been chosen based on performance analysis & simplicity of logic circuit: imm, uimm, iadd, isub, iaddi, isubi, bitor, bitand, bitxor, bitandinv, bitinv. For example a relative simple operation and a frequently used operation typically falls into such a subset such as commonly used operations like an addition, a subtraction and simple bit-operations etc.

The super pipelined VLIW of the invention includes a Fast Unit core, with a one cycle bypass-loop. In a preferred, but not exclusive embodiment that has been tested it comprises three copies of an ALU1 functional unit that implements only the chosen Subset of operations(similar as shown in figure **4**). Other ALU operations are executed on three copies of a new ALU functional unit that takes two cycles for the bypass-loop (2x super pipelined). In Figure 4 two ALU functional units that take two cycles for the bypass loop are shown. Similarly, all other units have latencies of (close to) 2x original latency. For example a relative complex operation and a less frequently used operation typically falls into such a subset such as operations like an multiplication, a division and complex mathematical operations etc.

| Unit | Issue-slots | | | | | Latency | Operations |
|---|---|---|---|---|---|---|---|
| alu1 | 1 | 2 | 3 | | | 1 | imm, uimm, iadd, isub, iadddi, isubi |
| | | | | | | | bitor, bitand, bitxor, bitandinv, bitinv |
| alu | 1 | | | 4 | 5 | 2 | the remaining original PNX1300 ALU operations |
| dmem | | | | 4 | 5 | 5 | |
| dmemspec | | | | | 5 | 5 | |
| shifter | 1 | | | 4 | 5 | 2 | |
| dspalu | 1 | | 3 | | 5 | 3 | |
| dspmul | | 2 | 3 | | | 5 | |
| branch | | 2 | 3 | 4 | | 8 | |
| falu | 1 | | | 4 | | 6 | |
| ifmul | | 2 | 3 | | | 5 | |
| fcomp | | | 3 | | | 2 | |

Execution time performance data is shown below of a prior art' PNX1300 versus the super-pipelined VLIW CPU of the invention (in terms of execution time cycles):

| | Prior art | VLIW CPU of the invention |
|---|---|---|
| Application | PNX1300 (cycles) | Super pipelined (cycles) |
| perf_ac3 | 249500 | 372410 |
| perf_filmdet_nopref-1.0.1 | 114366 | 142559 |
| perf_filter | 208661 | 303975 |
| perf_majority_select-1.0.0 | 129061 | 138006 |
| perf_motcomp-1.0.0 | 468887 | 548546 |
| perf_motest-1.1.0 | 373716 | 421609 |
| perf_mpeg2vdec-1.2.0 | 71469 | 91869 |
| perf_rgb2cmyk | 18021 | 20433 |
| perf_rgb2yiq | 24975 | 25951 |

Execution time performance data is shown below of a prior art' PNX1300 versus a 1.8 times clocked super-pipelined VLIW CPU of the invention (in terms of execution time mSec)

| | Prior art | VLIW CPU of the invention | Speedup factor |
|---|---|---|---|
| Application | PNX1300 (mSec) | Super pipelined (mSec) | |
| perf_ac3 | 1.1341 | 0.9404 | 1.21 |
| perf_filmdet_nopref-1.0.1 | 0.5198 | 0.36 | 1.44 |
| perf_filter | 0.9485 | 0.7676 | 1.24 |
| perf_majority_select-1.0.0 | 0.5866 | 0.3485 | 1.68 |
| perf_motcomp-1.0.0 | 2.1313 | 1.3852 | 1.54 |
| perf_motest-1.1.0 | 1.6987 | 1.0647 | 1.6 |
| perf_mpeg2vdec-1.2.0 | 0.3249 | 0.232 | 1.4 |
| perf_rgb2cmyk | 0.0819 | 0.0516 | 1.59 |
| perf_rgb2yiq | 0.1135 | 0.0655 | 1.73 |

Effectively, the new design and method of a super pipelined VLIW CPU has at the time of the invention resulted in a clock speedup of 1.8x and application speedup of up to 1.73x, for the same technology and design method. The invention will result in higher effective speedups when more optimizations are performed and/or after application have been recompiled etc.

The foregoing merely illustrates the principles of the invention. It will thus be appreciated that those skilled in the art will be able to devise various arrangements which, although not explicitly described or shown herein, embody the principles of the invention. For example, if it is not stated specifically in the specification, a connection path from one element to another element may or may not include a register. Also Functional Units. Such as shown in figures 4 and 5 may all have different complexities and also the number of fast as well as normal Functional Units may vary. These and other system configuration and optimization features will be evident to one of ordinary skill in the art in view of this disclosure, and are included within the scope of the following claims.

## Claims

1. A VLIW processor (400; 500) comprising:
- a first cluster (430) with a first plurality of first functional units (460); and
- a second cluster (440) with a second plurality of second functional units (470); wherein:
- each respective one of the first functional units consists of a respective single stage connected to multiple respective first inputs (422) and to a respective first output (424);
- each respective one of the second functional units has a super-pipelined configuration with a respective first stage (411) and a respective second stage (412) coupled through a respective first register (406d), the respective first stage being connected to multiple respective second inputs (426) and the respective second stage being connected to a respective second output (428);
- the processor comprises means (420, 403, 405) for interconnecting the first unit outputs and the second unit outputs with the first unit inputs and second unit inputs; and
- the means comprises:
- a cross-bar switch (420) having bar inputs coupled to the respective first outputs and to the respective second outputs, and having bar outputs coupled to the multiple respective first inputs and to the multiple respective second inputs;
- a third plurality of first multiplexers (403), each specific one of the first multiplexers being configured for selectively coupling one of a specific one of the bar outputs and the respective first outputs to a specific one of the multiple first inputs of a specific one of the first functional units; and
- a fourth plurality of second multiplexers (405), each particular one of the second multiplexers being configured for selectively coupling one of only a particular one of the bar outputs and the respective first outputs to a particular one of the multiple second inputs.

2. The processor (400) of claim 1, wherein:
- each specific one of the first functional units has a respective one of its multiple first inputs coupled to a multiplexer output of a respective one of the first multiplexers via a respective second register (406a);
- each specific one of the first functional units has its first output connected to a specific one of multiple first multiplexer inputs of each of the first multiplexers; and
- each specific one of the first functional units has its first output coupled, via a specific one of multiple third registers (406b) to a particular one of multiple second multiplexer inputs of each of the second multiplexers.

3. The processor (500) of claim 1, wherein:
- each specific one of the first functional units has a respective one of its multiple first inputs connected to a multiplexer output of a respective one of the first multiplexers
- each respective one of the first multiplexers has a specific multiplexer input connected to a specific one of the bar outputs via a specific one of multiple second registers (406a);
- each specific one of the first functional units has its first output coupled, via a specific one of multiple third registers (406b), to a specific one of multiple first multiplexer inputs of each of the first multiplexers and to a particular one of multiple second multiplexer inputs of each of the second multiplexers.

4. The processor of claim 1, 2 or 3, wherein each of the first functional units is configured for carrying out at least one of a plurality of relatively simple operations, and each of the second functional units is configured for carrying out at least one of a plurality of relatively complex operations.

5. The processor of claim 1, 2 or 3, wherein:
- each of the first functional units is configured for at least one of following operations: an addition, a subtraction, a load operation, a store operation; and
- each of the second functional units is configured for at least one of a multiplication and a division.

## Patentansprüche

1. Ein VLIW-Prozessor (400; 500), umfassend:
- einen ersten Cluster (430) mit einer ersten Mehrzahl von ersten Funktionseinheiten (460) und
- einen zweiten Cluster (440) mit einer zweiten Mehrzahl von zweiten Funktionseinheiten (470), wobei
- jede jeweilige erste Funktionseinheit aus einer jeweiligen Einzelstufe besteht, die an mehrere jeweilige erste Eingänge (422) und an einen jeweiligen ersten Ausgang (424) angeschlossen ist,
- jede jeweilige zweite Funktionseinheit eine Superpipeline-Konfiguration mit einer jeweiligen ersten Stufe (411) und einer jeweiligen zweiten Stufe (412), die durch ein jeweiliges erstes Register (406d) gekoppelt sind, hat, wobei die jeweilige erste Stufe an mehrere jeweilige zweite Eingänge (426) angeschlossen ist und die jeweilige zweite Stufe an einen jeweiligen zweiten Ausgang (428) angeschlossen ist,
- der Prozessor Mittel (420, 403, 405) zum Zusammenschalten der ersten Einheitausgänge und der zweiten Einheitausgänge mit den ersten Einheiteingängen und zweiten Einheiteingängen umfasst und
- das Mittel umfasst:
- einen Kreuzschienenverteiler (420), der Schieneneingänge hat, die an die jeweiligen ersten Ausgänge und an die jeweiligen zweiten Ausgänge gekoppelt sind, und Schienenausgänge hat, die an die mehreren jeweiligen ersten Eingänge und an die mehreren jeweiligen zweiten Eingänge gekoppelt sind,
- eine dritte Mehrzahl von ersten Multiplexern (403), wobei jeder spezifische erste Multiplexer für das selektive Koppeln eines spezifischen Schienenausgangs oder jeweiligen ersten Ausgangs an einen spezifischen Eingang der mehreren ersten Eingänge einer spezifischen ersten Funktionseinheit konfiguriert ist, und
- eine vierte Mehrzahl von zweiten Multiplexern (405), wobei jeder besondere zweite Multiplexer für das selektive Koppeln nur eines besonderen Schienenausgangs oder jeweiligen ersten Ausgangs an einen besonderen Eingang der mehreren zweiten Eingänge konfiguriert ist.

2. Der Prozessor (400) nach Anspruch 1, wobei:
- ein jeweiliger Eingang der mehreren ersten Eingänge jeder spezifischen ersten Funktionseinheit über ein jeweiliges zweites Register (406a) an einen Multiplexer-Ausgang eines jeweiligen ersten Multiplexers gekoppelt ist,
- der erste Ausgang jeder spezifischen ersten Funktionseinheit an einen spezifischen Eingang von mehreren ersten Multiplexer-Eingängen jedes ersten Multiplexers angeschlossen ist und
- der erste Ausgang jeder spezifischen ersten Funktionseinheit über ein spezifisches Register von mehreren dritten Registern (406b) an einen besonderen Eingang von mehreren zweiten Multiplexer-Eingängen jedes zweiten Multiplexers gekoppelt ist.

3. Der Prozessor (500) nach Anspruch 1, wobei:
- ein jeweiliger Eingang der mehreren ersten Eingänge jeder spezifischen ersten Funktionseinheit an einen Multiplexer-Ausgang eines jeweiligen ersten Multiplexers angeschlossen ist,
- ein spezifischer Multiplexer-Eingang jedes jeweiligen ersten Multiplexers über ein spezifisches Register von mehreren zweiten Registern (406a) an einen spezifischen Schienenausgang angeschlossen ist,
- der erste Ausgang jeder spezifischen ersten Funktionseinheit über ein spezifisches Register von mehreren dritten Registern (406b) an einen spezifischen Eingang von mehreren ersten Multiplexer-Eingängen jedes ersten Multiplexers und an einen besonderen Eingang von mehreren zweiten Multiplexer-Eingängen jedes zweiten Multiplexers gekoppelt ist.

4. Der Prozessor nach Anspruch 1, 2 oder 3, wobei jede erste Funktionseinheit für das Ausführen mindestens einer Operation einer Mehrzahl von relativ einfachen Operationen konfiguriert ist und jede zweite Funktionseinheit für das Ausführen mindestens einer Operation einer Mehrzahl von relativ komplexen Operationen konfiguriert ist.

5. Der Prozessor nach Anspruch 1, 2 oder 3, wobei:
- jede erste Funktionseinheit für mindestens eine der folgenden Operationen konfiguriert ist: eine Addition, eine Subtraktion, eine Ladeoperation, eine Abspeicheroperation, und
- jede zweite Funktionseinheit für mindestens eine Multiplikation oder eine Division konfiguriert ist.

## Revendications

1. Processeur VLIW (à mots d'instruction très longs) (400 ; 500) comprenant :
- une première grappe (430) avec une première pluralité de premières unités fonctionnelles (460) ; et
- une deuxième grappe (440) avec une deuxième pluralité de deuxièmes unités fonctionnelles (460) ; dans lequel :
- chaque unité respective parmi les premières unités fonctionnelles consiste en un unique étage respectif raccordé à de multiples premières entrées respectives (422) et à une première sortie respective (424) ;
- chaque unité respective parmi les deuxièmes unités fonctionnelles a une architecture super-pipeline avec un premier étage respectif (411) et un deuxième étage respectif (412) raccordés à travers un premier registre respectif (406d), le premier étage respectif étant raccordé à de multiples deuxièmes entrées respectives (426) et le deuxième étage respectif étant raccordé à une deuxième sortie respective (428) ;
- le processeur comprenant des moyens (420, 403, 405) pour interconnecter les premières sorties d'unités et les deuxièmes sorties d'unités avec les premières entrées d'unités et les deuxièmes entrées d'unités ; et
- les moyens comprenant :
- un commutateur cross-bar (420) ayant des entrées de barres raccordées aux premières sorties respectives et aux deuxièmes sorties respectives, et ayant des sorties de barres raccordées aux multiples premières entrées respectives et aux multiples deuxièmes entrées respectives ;
- une troisième pluralité de premiers multiplexeurs (403), chacun en particulier des premiers multiplexeurs étant configuré pour raccorder sélectivement une sortie particulière parmi les sorties de barres et les premières sorties respectives à une entrée particulière parmi les multiples premières entrées d'une unité particulière parmi les premières unités fonctionnelles ; et
- une quatrième pluralité de deuxièmes multiplexeurs (405), chacun en particulier des deuxièmes multiplexeurs étant configuré pour raccorder sélectivement une sortie particulière seulement parmi les sorties de barres et les premières sorties respectives à une entrée particulière parmi les multiples deuxièmes entrées.

2. Processeur (400) selon la revendication (1), dans lequel :
- chacune en particulier des premières unités fonctionnelles a une entrée respective parmi ses multiples premières entrées raccordée à une sortie de multiplexeur d'un multiplexeur particulier parmi les premiers multiplexeurs par l'intermédiaire d'un deuxième registre respectif (406a) ;
- chacune en particulier des premières unités fonctionnelles a sa première sortie raccordée à une entrée particulière parmi de multiples entrées des premiers multiplexeurs de chacun des premiers multiplexeurs ; et
- chacune en particulier des premières unités fonctionnelles a sa première sortie raccordée, par l'intermédiaire d'un registre particulier parmi de multiples troisièmes registres (406b), à une entrée particulière parmi de multiples entrées de deuxièmes multiplexeurs de chacun des deuxièmes multiplexeurs.

3. Processeur (500) selon la revendication (1), dans lequel :
- chacune en particulier des premières unités fonctionnelles a une entrée respective parmi ses multiples premières entrées raccordée à une sortie de multiplexeur d'un multiplexeur particulier parmi les premiers multiplexeurs ;
- chacun en particulier des premiers multiplexeurs a une entrée de multiplexeur particulière raccordé à une sortie particulière parmi les sorties de barres par l'intermédiaire d'un registre particulier parmi les multiples deuxièmes registres (406a) ;
- chacune en particulier des premières unités fonctionnelles a sa première sortie raccordée, par l'intermédiaire d'un registre particulier parmi de multiples troisièmes registres (406b), à une entrée particulière parmi les multiples premières entrées de multiplexeur de chacun des premiers multiplexeurs et à une entrée particulière parmi de multiples entrées de deuxièmes multiplexeurs de chacun des deuxièmes multiplexeurs.

4. Processeur selon les revendications 1, 2 ou 3, dans lequel chacune des premières unités fonctionnelles est configurée de manière à réaliser au moins une parmi une pluralité d'opérations relativement simples, et chacune des deuxièmes unités fonctionnelles est configurée de manière à réaliser au moins une parmi une pluralité d'opérations relativement complexes.

5. Processeur selon les revendications 1, 2 ou 3, dans lequel :
- chacune des premières unités fonctionnelles est configurée de manière à réaliser au moins l'une des opérations suivantes : addition, soustraction, opération de chargement, opération de stockage ; et
- chacune des deuxièmes unités fonctionnelles est configurée de manière à réaliser au moins une opération parmi une multiplication et une division.
